(19) Europäisches Patentamt
European Patent Office
Office européen des brevets

(11) **EP 3 885 794 A1**

(12) **EUROPEAN PATENT APPLICATION**
published in accordance with Art. 153(4) EPC

(43) Date of publication:
**29.09.2021 Bulletin 2021/39**

(51) Int Cl.:
***G01S 13/86*** (2006.01)

(21) Application number: **19886098.3**

(86) International application number:
**PCT/CN2019/104841**

(22) Date of filing: **09.09.2019**

(87) International publication number:
**WO 2020/103533 (28.05.2020 Gazette 2020/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.11.2018 CN 201811382843**

(71) Applicant: **CRRC Zhuzhou Locomotive Co., Ltd
Zhuzhou, Hunan 412001 (CN)**

(72) Inventors:
• **WANG, Rui
Zhuzhou, Hunan 412001 (CN)**

• **WANG, Hugao
Zhuzhou, Hunan 412001 (CN)**
• **QU, Haiyang
Zhuzhou, Hunan 412001 (CN)**
• **CHEN, Yong
Zhuzhou, Hunan 412001 (CN)**
• **LI, Xining
Zhuzhou, Hunan 412001 (CN)**

(74) Representative: **Ran, Handong et al
Maucher Jenkins
26 Caxton Street
London SW1H 0RJ (GB)**

(54) **TRACK AND ROAD OBSTACLE DETECTING METHOD**

(57) A track and a road obstacle detecting method, comprising the steps of: A. obtaining an image of the front of a vehicle by means of a monocular camera or multiple cameras; B. transmitting and receiving an optical signal by means of a millimeter-wave device and a laser device so as to obtain a 2D point cloud image and a 2D spectrogram; C. performing multi-view processing on the image, and then analyzing and matching a laser radar system with a video system by means of a focal plane array by using the video system as a medium; for a millimeterwave radar, matching the video system with a millimeter-wave radar system (3) by means of data preprocessing and an edge matching method so as to complete the pixel level fusion of the laser radar system (1), the millimeter-wave radar system (3) and the video system; performing sequence analysis on the acquired image, filtering a multi-radar system and the video system, and matching images acquired by the millimeter-wave radar and the laser radar with an original image; and D. marking obstacles. The present track and road obstacle detecting method may accurately identify obstacles, has certain early warning functions, and may simultaneously ensure accuracy and the early warning functions.

Fig. 2

## Description

## Technical Field

The present invention belongs to the field of traffic, and particularly relates to a method for detecting rail and road obstacles.

## Background

The domestic mainstream obstacle detection technology is still in its infancy. Now the main rail transit obstacle detection technology still relies on a contact obstacle detection device arranged at the front end of a rail vehicle. This technology implements detection by mechanical means of touch, so its detection range is short and it does not have early warning capability. In addition, the current radar detection technology is not mature enough, especially when driving on turns and slopes, its detection precision and accuracy cannot meet the obstacle detection requirements of road traffic. Moreover, the number of laser scanning points is limited, and the scanning points are uneven and sparse, which easily causes the vehicle to be unable to identify obstacles where the point cloud is relatively sparse, and the sizes of the obstacles cannot be qualitatively estimated. At the same time, the millimeterwave radar is not mature, its precision and accuracy during long-distance detection are difficult to meet the requirements of automatic driving systems, and it takes a long time to upgrade a single radar system. With the development of unmanned driving technology and artificial intelligence technology, vehicles are bound to have early warning functions and automatic obstacle detection technology, which will rapidly spread throughout the fields of urban rail transit and trackless transportation in the foreseeable future. Therefore, the comprehensive use of multiple radar systems to detect obstacles will also become an urgent need in the era of autonomous driving technology and artificial intelligence.

## Summary

Aiming at the above shortcomings of the prior art, the purpose of the present invention is to provide a method for detecting rail and road obstacles based on laser radar, millimeterwave radar and image recognition, which can determine whether obstacles exist and detect the distance of an obstacle, thereby providing a basis for determining whether to implement braking or emergency braking by a control center.

In order to solve the above technical problems, the technical solution adopted by the present invention is as follows:

A method for detecting rail and road obstacles, including the following steps:

Step A. acquiring an image in front of a vehicle by a monocular or multi-lens camera installed on the head of the rail vehicle;

Step B. transmitting optical signals by a millimeterwave device and a laser device and receiving the optical signals by a photon detector to obtain a 2D point cloud image and a 2D spectrogram;

Step C. performing multi-view processing on the images, and then matching laser radar and video systems by focal plane array analysis with the video system as a medium; for a millimeterwave radar, matching the video system with a millimeterwave radar system by data preprocessing and edge matching to complete pixel-level fusion of the laser radar, millimeterwave radar, and video systems; performing sequence analysis on the acquired images, performing filter processing on the multiple radar systems and the video system, and matching the images captured by the millimeterwave radar and the laser radar with the original image; and

Step D. analyzing forward obstacles based on the characteristics of the millimeterwave radar and the laser radar, calculating weights by machine learning and adjusting parameters according to weather conditions, based on the recognition precision of the millimeterwave radar under extreme weather conditions (heavy rain (1d (or 24h), rainfall 100~250 mm), strong wind above level 7, heavy fog with visibility not more than 150 meters, strong sandstorm, or haze with PM2.0 above 500); under non-extreme severe weather conditions, segmenting objects according to their shapes by machine learning, and setting a threshold value by machine learning to strengthen the recognition weights of the laser radar; detecting some possible obscured objects by means of the penetrating ability of the millimeterwave radar; and setting a distance module to analyze possible obstacles in front of the vehicle, and marking the obstacles according to the characteristics of distance module points.

Further, the method includes step E. marking parameters by the distance module for straight roads, curves, and ramps, and displaying the distance between an obstacle and a vehicle.

Further, the method includes step F. obtaining the actual size of an obstacle according to the corresponding obstacle, the distance of the obstacle and the size of the obstacle on the image captured by the camera; when the actual size of the obstacle exceeds 30cm*30cm*30cm, decelerating the rail vehicle; and when the actual size of the obstacle exceeds 60cm*60cm*60cm, taking emergency braking on the rail vehicle. The present invention adopts the integrated technology of multiple radar systems and image recognition, comprehensively uses the advantages of image recognition, millimeterwave radar and laser radar, realizes ranging and obstacle determination through a vehicle device installed on the rail vehicle, and recognizes obstacles. The distance of an obstacle is determined by transmitting and receiving light beams, and the scanned results are synchronized to an image by means of a block diagram. Finally, whether to implement braking or emergency braking is determined in the control center according to the distance and the size of the obstacle, so as to realize the requirements of early warning and safety improvement of rail vehicles, and improve the safety of unmanned driving.

The present invention can recognize obstacles more accurately, and has certain early warning function. Compared with the existing detection method, the method of the present invention can simultaneously ensure accuracy and early warning function.

**Brief Description of the Drawings**

Fig. 1 is a schematic installation diagram of a laser radar system, a camera system, a millimeterwave radar system and a vehicle-mounted system in the method of the present invention.
Fig. 2 is a schematic diagram of detection ranges of the laser radar system, the camera system, and the millimeterwave radar system in the method of the present invention.
Fig. 3 is a schematic diagram of optical scanning laser radar.

**Detailed Description of Embodiments**

The principle of the present invention is prepared as follows:

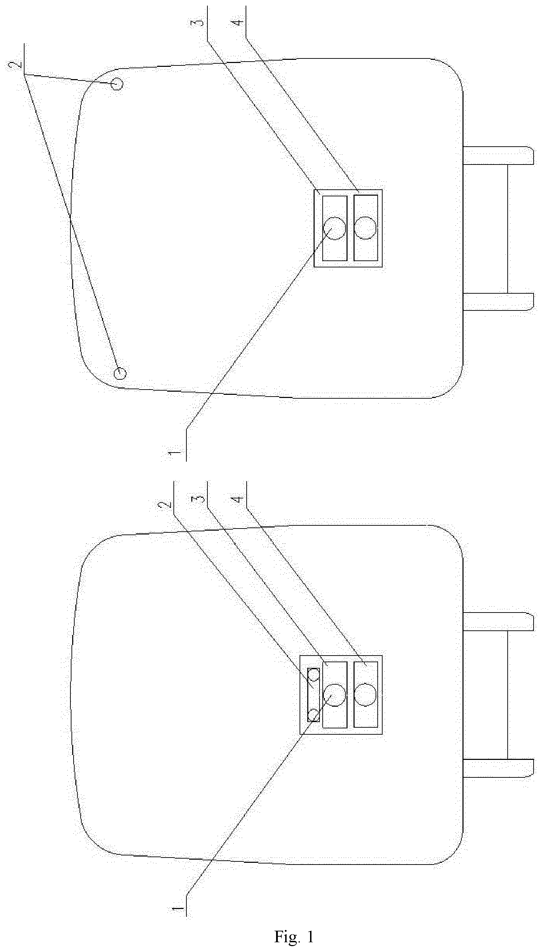

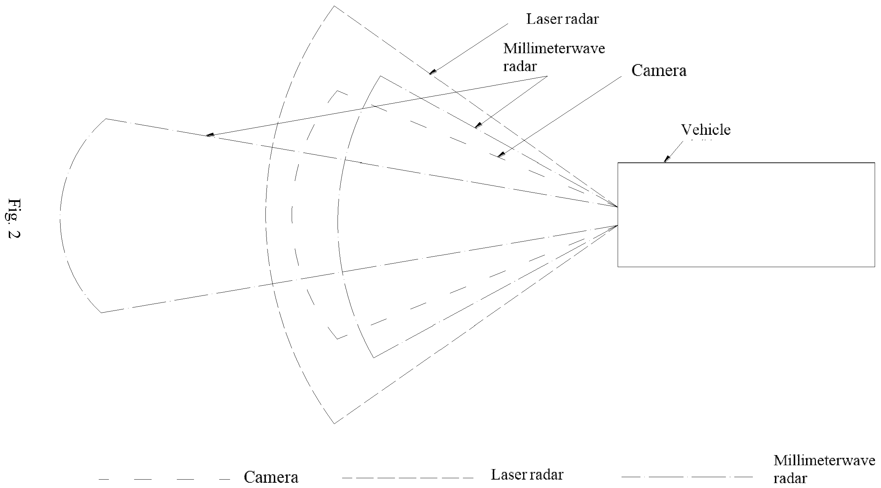

On a rail vehicle, a laser radar system 1, a camera system 2, a millimeterwave radar system 3 and a vehicle system 4 are installed at an end of the vehicle according to Fig. 1. The detection ranges of the laser radar system 1, the camera system 2, and the millimeterwave radar system 3 are shown in Fig. 2.

Millimeter wave detection technology

Millimeterwave radar sensors use millimeterwave. Generally, the millimeterwave is in a frequency domain of 30-300 GHz (wavelength of 1-10 mm). The wavelength of millimeterwave is between those of centimeter wave and light wave, so the millimeterwave has the advantages of microwave guidance and photoelectric guidance.

Compared with centimeter wave radar, the millimeterwave radar has the characteristics of small size, easy integration and high spatial resolution. Its ranging principle is the same as that of general radar, that is, radio waves (radar waves) are sent out, then echoes are received, and position data of a target is measured according to the time difference between sending and receiving.

The millimeterwave radar can complement a camera and a laser radar, and convert long-distance vehicles, road metal/stone/concrete obstacles in front of the vehicle into target information and send the target information to a decision-making and planning module. Especially under the conditions of bad weather and low visibility, it can make up for the shortcomings of a visual sensor.

Laser beam detection technology:

Laser radar is a radar system that emits a laser beam to detect characteristic quantities such as position and speed of a target. Its working principle is, a detection signal (laser beam) is transmitted to the target, then the received signal (target echo) reflected from the target is compared with the transmitted signal to match the transmitted signal with the recovered signal, the time $\Delta t$ is calculated, and $s=v^*\Delta t$ can be obtained according to the speed; meanwhile, each laser point transmitted is matched to an image, and information such as orientation, height, posture and shape can be obtained according to the number of point clouds and their positions on the image; in addition, a speed parameter of the front vehicle can be obtained according to the speed of the vehicle and the distance difference of two detections; therefore, the laser radar can obtain relevant information of the target, such as target distance, orientation, height, speed, posture, and even shape.

The wavelength of laser used in the radar system is usually only on the order of micrometers, so it can detect very tiny targets, and the measurement distance is much longer than that of millimeterwave radar and other vehicle-mounted standard radars. However, its precision is greatly affected by weathers such as rain, snow, fog, and sunlight, so its performance in rain and snow needs to be improved.

A complete laser device should include three parts, a rotating mirror, a correction mirror, and a laser transmitting and receiving device. The laser transmitting and receiving device includes a transmitting unit and a receiving unit. Laser is transmitted by a diode, the laser is reflected to the rotating mirror by the correction mirror, and then the reflected laser is reflected to the correction mirror and finally to the receiving device. Because the rotating mirror has a rotating and well-designed structure, it can receive light within a range up to 180 degrees.

As a unique movement mechanism, the mirror can simply move up and down to form point clouds in the height direction.

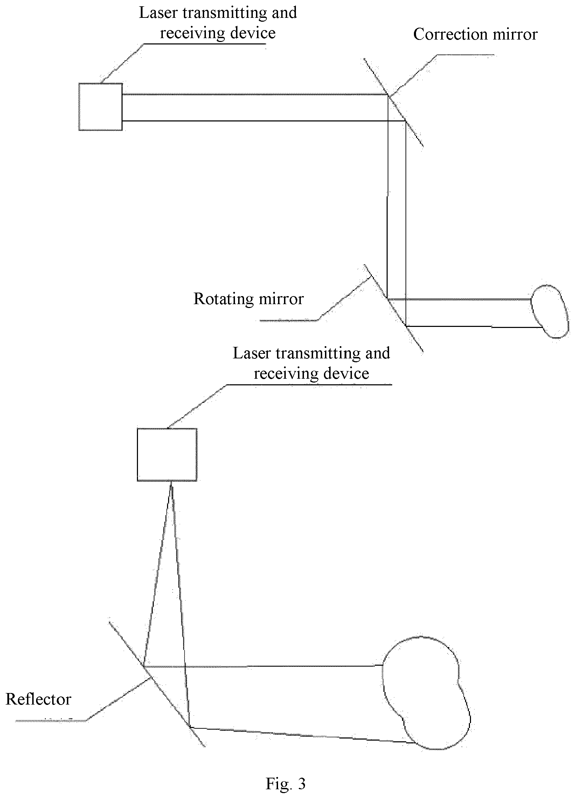

In addition, optical scanning laser radar is also a very common technology. It transmits laser to illuminate a large area to form a 2D focal plane array, as shown in Fig. 3.

The detection principle is, based on the return time, a photon detector is installed near the diode, and the distance of the target can be calculated from the time difference between transmission and detection. Meanwhile, a pulse measurement system can also collect a large number of point clouds after being activated, and a 2D image can also be generated from the point clouds.

Radar image synchronization technology: Considering different viewing angles and test ranges of radar images, and noise of intensity information due to coherent superposition of radar echo signals of multiple radar systems, a radar system and an imaging system need to be matched.

1. Multiple radar systems

Radar systems are subjected to superposition of echo signals and coherent superposition of signal waves, so multi-view processing is required, that is, De Grandi, Non-linear Diffusion filtering is utilized to avoid the interference of multiple radar systems.

2. Matching of image and laser radar system

A camera installed at the front end of the vehicle captures information of the front of the vehicle, the laser emits multiple pulsed beams to form a 2D focal plane array, an image recognition range of a region of interest and a focal plane array range are selected, the plane and the camera are clipped by means of a central processing unit, and the edge is strengthened and corrected.

3. Matching of millimeterwave radar and image

The camera installed at the front end of the vehicle captures information of the front of the vehicle, and the millimeterwave radar detects obstacles in front. When a wave signal encounters an obstacle, it will be reflected. The distance of the obstacle is obtained according to the frequency difference. The formula is as follows:

$$t_d = 2R/c$$

R: target distance
$t_d$: delay time
C: speed of light

According to the Doppler effect and the triangular waveform, it can be obtained:

$$R = \frac{t_m C}{8 \Delta F} \ (f_{b+} - f_{b-})$$

$f_{b-}$: falling frequency
$f_{b+}$: rising frequency
$t_m$: time
$\Delta F$: bandwidth of the transmitted signal

A 2D spectrogram region of interest and an image region of interest are selected, and the edge is strengthened and corrected. The specific operations are as follows:
After the millimeterwave radar transmits and receives a 2D spectrogram, a distance distribution map can be obtained according to the distance. Considering the difference between the regions recognized by the millimeterwave radar and the video, a region of interest, that is, a region where the video system is superposed with the radar system, should be selected first. The biggest difficulty at present is edge selection, because it is difficult to match at edge points. Therefore, this method can supplement missing data by interpolation, fitting and data pre-cleaning, thereby ensuring the homogeneity of a data layer to the greatest extent.

At the same time, each sensor data is converted into a Bayesian estimate, and an optimal fusion number is determined through a neural network, so as to complete the matching of the edge.

Filtering

Considering spots and decay during the image matching process, possible spots and decay in images can be eliminated by means of mean filtering, median filtering or the like.

Image obstacle segmentation fusion and recognition distance

The distance between a point in a 2D dot matrix recognized by laser and a vehicle is marked as X, then $X_1$, $X_2$... are selected, and a distance variable $\Delta X$ is also selected.

Points in $[X_1-\Delta X, X_1+\Delta X]$, $[X_2-\Delta X, X_2+\Delta X]$... are selected in turn and denoted by different modules, 8 regions around the 5th point as shown in the figure are determined, and if there are points of the same type, that is, points connected to the same distance module within the same module, points of the same distance module are obtained according to the continuity condition, then a plane is constituted based on these points as an obstacle. At the same time, the laser image and distance parameters are transmitted to the central processing unit.

| 1 | 2 | 3 |
|---|---|---|
| 4 | 5 | 6 |
| 7 | 8 | 9 |

Similarly, the distance between each pixel in a 2D spectrogram recognized by millimeterwave and a vehicle is marked as X, then $X_1$, $X_2$... are selected, and a distance variable $\Delta X$ is also selected.

Points in $[X_1-\Delta X, X_1+\Delta X]$, $[X_2-\Delta X, X_2+\Delta X]$... are selected in turn and denoted by different modules, 8 regions around the 5th point as shown in the figure are determined, and if there are points of the same type, that is, points connected to the same distance module within the same module, points of the same distance module are obtained according to the continuity condition, then a plane is constituted based on these points as an obstacle. At the same time, the millimeterwave image and distance parameters are transmitted to the central processing unit.

After the laser image, the millimeterwave image and the distance parameters are received, a threshold value is set according to the recognition distances, recognition regions, and recognition characteristics of the millimeterwave radar and the laser radar, that is, the laser image is used for the distance greater than a certain X, the millimeterwave image is used for the distance smaller than a certain X, and the laser radar is used as a reference. Finally, an obstacle is selected from the original image and its distance parameters are marked. Therefore, the recognition and detection on the distance of the obstacle are realized.

Straight and curve obstacle recognition

In a straight region, the algorithm is relatively simple, a recognition region can be directly set for segmentation, and obstacle recognition and distance measurement can be achieved according to the above method.

Curve regions are classified according to rail vehicles and urban trackless vehicles, and analyzed separately for rail vehicles and trackless vehicles. For a rail vehicle, the curve should be judged according to a curve detection device at the rim, the recognition region should be adjusted appropriately, the distance of an obstacle is determined by a curve-based algorithm for the curve condition, and then the obstacle and distance in the driving direction of the vehicle are determined to determine a traction braking plan. For a trackless vehicle in the curve region, the recognition region should be expanded. On the premise that the measurement region of the millimeterwave radar is wide, the recognition region can be expanded. Due to the detection dead angle of the laser radar, potential obstacles on the way are prejudged by means of a millimeterwave radar and a binocular camera, thereby recognizing the obstacles in a wider range and determining their distances. According to the wiedemann99 vehicle-following model discrimination, braking instructions are implemented to ensure vehicle safety.

Due to the vigorous development of unmanned driving and intelligent driving technology, it is bound to require future urban vehicles and rail vehicles to have the ability to automatically recognize obstacles. The present invention combines the advantages of millimeterwave recognition technology and laser technology, explains how to eliminate interference, and projects obstacles onto images. In addition, considering the safety, the use of multiple radar systems to improve redundancy and their production are also inevitable requirements for the implementation of large-scale urban transportation systems, and this is an invention that can see results in a short time. The specific steps of the present invention are as follows:

Step A. Acquisition of a real-time image: an image in front of a vehicle is acquired by a monocular or multi-lens camera installed on the head of the rail vehicle, wherein the camera is an optical anti-shake camera with ultra-long focal length.

Step B. Collection of real-time optical signals: optical signals are transmitted by a millimeterwave device and a laser device and received by a photon detector to obtain a 2D point cloud image and a 2D spectrogram.

Step C. Pre-processing and pre-matching of the images: multi-view processing is performed on the images, that is, De Grandi, Non-linear Diffusion filtering is performed to avoid radar interference, and then laser radar and video systems are matched by focal plane array analysis with an image system as a medium; for a millimeterwave radar, a video system is matched with a millimeterwave radar system by data preprocessing and edge matching to complete pixel-level fusion of the laser radar, millimeterwave radar, and video systems; sequence analysis is performed on the acquired images, filter processing is performed on the multiple radar systems and the video system, and the images captured by the millimeterwave radar and the laser radar are matched with the original image. Therefore, the amount of calculation for direct matching of multiple systems is reduced, and the pre-matching is also more accurate than simple coordinate matching.

Step D. Determination of obstacles: forward obstacles are analyzed based on the characteristics of the millimeterwave radar and the laser radar; considering that the millimeterwave radar has high recognition precision in bad and extreme weather (heavy rain (1d (or 24h), rainfall 100~250 mm), strong wind above level 7, heavy fog with visibility not more than 150 meters, strong sandstorm, and haze with PM2.0 above 500), weights are calculated by machine learning and parameters are adjusted under extreme weather conditions, based on the recognition of the millimeterwave radar; under non-extreme severe weather conditions, objects are segmented according to their shapes by machine learning, and a threshold value is set by machine learning to strengthen the recognition weights of the laser radar, based on the recognition of the laser radar; some possible obscured objects are detected by means of the penetrating ability of the millimeterwave radar to realize early warning, which is extremely effective for collision avoidance system of trams; a distance module is set to analyze possible obstacles in front of the vehicle, and the obstacles are marked according to the characteristics of distance module points.

Step E. Determination of a distance: parameters are marked by the distance module for straight roads, curves, and ramps, and the distance between an obstacle and a vehicle is displayed.

Step F. Recognition of an obstacle and measures taken: the actual size of an obstacle is obtained according to the corresponding obstacle, the distance of the obstacle and the size of the obstacle on the image captured by the camera; from practical experience, when the actual size of the obstacle exceeds 30cm*30cm*30cm, it is considered to affect the normal passage of a rail vehicle, and the control center will decelerate the rail vehicle; when the actual size of the obstacle exceeds 60cm*60cm*60cm, it is considered that the obstacle will cause the train to derail or cause a major traffic accident, and the control center will take emergency braking on the rail vehicle. In urban traffic, traction and braking are performed according to the Wiedemann99 driving behavior model.

The embodiments of the present invention are described above with reference to the drawings, but the present invention is not limited to the specific embodiments. The specific embodiments described above are merely illustrative but not restrictive. Many forms may also be made by those of ordinary skill in the art under the enlightenment of the present invention without departing from the purpose of the present invention and the scope of the claims, and these forms fall into the scope of the present invention.

**Claims**

1. A method for detecting rail and road obstacles, comprising the following steps:

   step A. acquiring an image in front of a vehicle by a monocular or multi-lens camera installed on the head of the rail vehicle;
   step B. transmitting optical signals by a millimeterwave device and a laser device and receiving the optical signals by a photon detector to obtain a 2D point cloud image and a 2D spectrogram;
   step C. performing multi-view processing on the images, and then matching laser radar and video systems by focal plane array analysis with the video system as a medium; for a millimeterwave radar, matching the video system with a millimeterwave radar system by data preprocessing and edge matching to complete pixel-level fusion of the laser radar, millimeterwave radar, and video systems; performing sequence analysis on the acquired images, performing filter processing on the multiple radar systems and the video system, and matching the images captured by the millimeterwave radar and the laser radar with the original image; and
   step D. analyzing forward obstacles based on the characteristics of the millimeterwave radar and the laser radar, calculating weights by machine learning and adjusting parameters according to weather conditions, based on the recognition precision of the millimeterwave radar under extreme weather conditions; under non-extreme severe weather conditions, segmenting objects according to their shapes by machine learning, and setting a threshold value by machine learning to strengthen the recognition weights of the laser radar; detecting some possible obscured objects by means of the penetrating ability of the millimeterwave radar; and setting a distance module to analyze possible obstacles in front of the vehicle, and marking the obstacles according to the characteristics of distance module points.

2. The method for detecting rail and road obstacles according to claim 1, further comprising:
   step E. marking parameters by the distance module for straight roads, curves, and ramps, and displaying the distance between an obstacle and a vehicle.

3. The method for detecting rail and road obstacles according to claim 2, further comprising:
   step F. obtaining the actual size of an obstacle according to the corresponding obstacle, the distance of the obstacle and the size of the obstacle on the image captured by the camera; when the actual size of the obstacle exceeds 30cm*30cm*30cm, decelerating the rail vehicle; and when the actual size of the obstacle exceeds 60cm*60cm*60cm, taking emergency braking on the rail vehicle.

Fig. 1

Laser radar

Millimeterwave
radar

Camera

Vehicle

Millimeterwave
radar

Laser radar

Camera

Fig. 2

Laser transmitting and
receiving device

Correction mirror

Rotating mirror

Laser transmitting and
receiving device

Reflector

Fig. 3

| INTERNATIONAL SEARCH REPORT | | International application No. |
|---|---|---|
| | | **PCT/CN2019/104841** |

**A. CLASSIFICATION OF SUBJECT MATTER**

G01S 13/86(2006.01)i

According to International Patent Classification (IPC) or to both national classification and IPC

**B. FIELDS SEARCHED**

Minimum documentation searched (classification system followed by classification symbols)

G01S; G06K

Documentation searched other than minimum documentation to the extent that such documents are included in the fields searched

Electronic data base consulted during the international search (name of data base and, where practicable, search terms used)

CNPAT, CNKI, WPI, EPODOC: 视频, 图像, 相机, 摄像, 激光, 毫米波雷达, 匹配, 融合, 障碍, video, image, camera, laser, millimeter w wave, radar, match???, adapt+, fusion, obstacle

**C. DOCUMENTS CONSIDERED TO BE RELEVANT**

| Category* | Citation of document, with indication, where appropriate, of the relevant passages | Relevant to claim No. |
|---|---|---|
| PX | CN 109298415 A (CRRC ZHUZHOU LOCOMOTIVE CO., LTD.) 01 February 2019 (2019-02-01)<br>claims 1-3, description, paragraphs [0018]-[0072], and figures 1-3 | 1-3 |
| Y | CN 108416257 A (BEIJING JIAOTONG UNIVERSITY) 17 August 2018 (2018-08-17)<br>description, paragraphs [0018]-[0029], and figures 1-2 | 1-3 |
| Y | CN 107991671 A (ZHEJIANG DONGCHE SMART TECHNOLOGY CO., LTD.) 04 May 2018 (2018-05-04)<br>description, paragraphs [0022]-[0035], and figures 1-3 | 1-3 |
| A | CN 106646474 A (CHINA SOUTH INDUSTRIES GROUP CORPORATION INSTITUTE OF AUTOMATION) 10 May 2017 (2017-05-10)<br>entire document | 1-3 |
| A | US 2007286475 A1 (FUJI JUKOGYO KABUSHIKI KAISHA) 13 December 2007 (2007-12-13)<br>entire document | 1-3 |
| A | JP 09264954 A (FUJITSU TEN LTD.) 07 October 1997 (1997-10-07)<br>entire document | 1-3 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 November 2019** | **27 November 2019** |

| Name and mailing address of the ISA/CN | Authorized officer |
|---|---|
| **China National Intellectual Property Administration**<br>**No. 6, Xitucheng Road, Jimenqiao Haidian District, Beijing**<br>**100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/104841**

| Patent document cited in search report | | | Publication date (day/month/year) | Patent family member(s) | | | Publication date (day/month/year) |
|---|---|---|---|---|---|---|---|
| CN | 109298415 | A | 01 February 2019 | None | | | |
| CN | 108416257 | A | 17 August 2018 | None | | | |
| CN | 107991671 | A | 04 May 2018 | None | | | |
| CN | 106646474 | A | 10 May 2017 | None | | | |
| US | 2007286475 | A1 | 13 December 2007 | US | 7710247 | B2 | 04 May 2010 |
| | | | | JP | 2007310741 | A | 29 November 2007 |
| | | | | DE | 102007023037 | A1 | 22 November 2007 |
| JP | 09264954 | A | 07 October 1997 | None | | | |

Form PCT/ISA/210 (patent family annex) (January 2015)